(19) **Europäisches Patentamt / European Patent Office / Office européen des brevets**

(11) **EP 4 752 944 A1**

(12) **EUROPEAN PATENT APPLICATION**
published in accordance with Art. 153(4) EPC

(43) Date of publication:
03.06.2026 Bulletin 2026/23

(21) Application number: 24882773.5

(22) Date of filing: 22.10.2024

(51) International Patent Classification (IPC):
*H01M 4/13* (2010.01)          *H01M 4/62* (2006.01)
*H01M 4/04* (2006.01)          *H01M 4/02* (2006.01)

(52) Cooperative Patent Classification (CPC):
H01M 4/02; H01M 4/04; H01M 4/13; H01M 4/62;
Y02E 60/10

(86) International application number:
PCT/KR2024/016081

(87) International publication number:
WO 2025/089746 (01.05.2025 Gazette 2025/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.10.2023 KR 20230142321

(71) Applicant: LG Energy Solution, Ltd.
Seoul 07335 (KR)

(72) Inventors:
• YANG, Gui Eum
Daejeon 34122 (KR)
• YOO, Houng Sik
Daejeon 34122 (KR)
• LEE, Jong Won
Daejeon 34122 (KR)
• KIM, Dong Hyun
Daejeon 34122 (KR)
• CHOI, Hyeon
Daejeon 34122 (KR)
• MOON, Il Jae
Daejeon 34122 (KR)
• CHOI, Ye Rim
Daejeon 34122 (KR)

(74) Representative: Plasseraud IP
104 Rue de Richelieu
CS92104
75080 Paris Cedex 02 (FR)

(54) **DAM SLURRY FOR ELECTRODE, ELECTRODE USING SAME, AND METHOD FOR MANUFACTURING ELECTRODE**

(57) A dam slurry for electrode includes a hydrophobic additive, wherein the dam slurry for electrode is capable of controlling the electrode sliding shape and suppressing the occurrence of fat edges.

EP 4 752 944 A1

【FIG. 1】

**Description**

[Technical Field]

This application claims the benefit of priority from Korean Patent Application No. 10-2023-0142321, filed on October 23, 2023, and the entire contents of the Korean patent application are incorporated herein by reference.

The present disclosure relates to a dam slurry for electrode, an electrode for a secondary battery applying the same, and an electrode manufacturing method applying the same.

[Background]

With the increasing development and demand for mobile devices, the demand for secondary batteries as energy sources is rapidly increasing, and accordingly, extensive research is being conducted on batteries that can meet various requirements.

One of the major research challenges in these secondary batteries is improving safety. A major cause of battery safety-related incidents is due to reaching abnormally high temperature state caused by short circuits between positive and negative electrodes. In other words, under normal conditions, a separator is located between the positive and negative electrodes to maintain electrical insulation. However, existing separators show limitations in abnormal situations such as when the battery is overcharged or over-discharged, or when electrode materials undergo dendritic growth, etc. Various methods have been attempted to reduce the possibility of electrode short circuits under external impact or high-temperature conditions. For example, methods have been proposed to form an insulating layer by attaching insulating tape or coating insulating liquid in the boundary region between the uncoated part and coated part of the electrode.

However, research on forming an insulating layer on the electrode has been mainly focused on the positive electrode. Therefore, there is a need for technological development regarding methods to increase the safety of negative electrodes.

[Summary]

[Technical Problem]

Accordingly, an object of the present disclosure is to provide a dam slurry applicable as an insulating layer for electrode and having excellent processability, an electrode for a secondary battery applying the same, and an electrode manufacturing method.

[Technical Solution]

To solve the above problem, a dam slurry for electrode according to one embodiment of the present disclosure includes: inorganic particles; a binder; a hydrophobic additive; and an aqueous solvent. The hydrophobic additive has a particle shape with a specific surface area (BET) of 500 $m^2/g$ or more. In addition, the content of the hydrophobic additive is in a range of 0.03 parts by weight to 35 parts by weight based on 100 parts by weight of total solid content.

In a specific embodiment, the dam slurry includes, based on 100 parts by weight of total solid content, 60 parts by weight to 90 parts by weight of the inorganic particles; 5 parts by weight to 20 parts by weight of the binder; and 0.03 parts by weight to 35 parts by weight of the hydrophobic additive.

In one embodiment, the hydrophobic additive has a specific surface area (BET) in a range of 700 $m^2/g$ to 3,000 $m^2/g$. In a specific embodiment, the hydrophobic additive is a carbon-based additive. For example, the carbon-based additive is an activated carbon.

In a specific embodiment, the carbon-based additive includes one or more types of a first additive having a specific surface area in a range from 700 $m^2/g$ to 1,500 $m^2/g$; and a second additive having a specific surface area in a range from 1,500 $m^2/g$ to 3,000 $m^2/g$. For example, the first additive may be a large diameter activated carbon and the second additive may be a relatively small diameter activated carbon.

In one embodiment, the binder is an aqueous binder, and may be a mixture of one type or two or more types. For example, the binder includes carboxymethylcellulose (CMC) and styrene butadiene rubber (SBR) binders in a weight ratio of 1:1 to 1:3.

In yet another embodiment, the inorganic particles are one or more types of boehmite (AlOOH) and alumina ($Al_2O_3$). For example, the inorganic particles are boehmite.

In one embodiment, the dam slurry has a volume resistance of 1,000 $\Omega \cdot cm$ or more. More particularly, the dam slurry has a volume resistance in a range of 1,000 $\Omega \cdot cm$ to 5,000 $\Omega \cdot cm$ and has substantially electrical insulating properties.

In yet another embodiment, the dam slurry has a surface tension of 70 mN/m or more. More particularly, the dam slurry has a surface tension in a range of 70 mN/m to 85 mN/m.

The present disclosure provides an electrode for a secondary battery applying the dam slurry for electrode described above. In addition, the present disclosure provides a secondary battery applying the electrode.

In one embodiment, the electrode for the secondary battery includes a current collector; an active material layer formed on one side or both sides of the current collector; and a dam insulating layer formed on a width direction side surface of the active material layer. Specifically, the dam insulating layer includes inorganic particles, a binder, and a hydrophobic additive. The hydrophobic additive is a particle shape with a specific surface area (BET) of 500 $m^2$/g or more. In addition, the content of the hydrophobic additive is in a range of 0.03 parts by weight to 35 parts by weight based on 100 parts by weight of total dam insulating layer.

In yet another embodiment, the electrode for the secondary battery according to the present disclosure satisfies formula 1 below.

[Formula 1]

$$75 \le \frac{H_{edge}}{H_{ever}} \times 100 \le 110$$

In formula 1 above,

$H_{ever}$ represents an average height (mm) of a flat portion of the active material layer, and
$H_{edge}$ represents a maximum height (mm) observed at an edge portion of the active material layer.

In a specific example, the electrode is a negative electrode.

In addition, the present disclosure provides an electrode manufacturing method using the above-described dam slurry for electrode. In one embodiment, an electrode manufacturing method according to the present disclosure includes: an electrode coating step of discharging an electrode slurry and the above-described dam slurry on a current collector; and a step of drying the electrode coated with the electrode slurry and the dam slurry.

In a specific embodiment, the electrode coating step discharges the electrode slurry on the current collector to form a coated part. In addition, the dam slurry is discharged on an uncoated part where the electrode slurry is not discharged.

In another specific embodiment, the electrode coating step is performed by simultaneously discharging, in a slot die, the electrode slurry and the dam slurry on the current collector.

[Advantageous Effects]

The dam slurry for electrode according to the present disclosure is capable of controlling the electrode sliding shape and suppressing the occurrence of fat edges.

[Brief Description of the Drawings]

FIG. 1 is a result illustrating a thickness profile of an electrode specimen according to one embodiment of the present disclosure.
FIG. 2 is a result illustrating a thickness profile of an electrode specimen according to one comparative example of the present disclosure.

[Best Mode]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

Hereinafter, the present disclosure is described in more detail.

The present disclosure provides a dam slurry for electrode including a hydrophobic additive. In one embodiment, the dam slurry for electrode according to the present disclosure includes inorganic particles; a binder; a hydrophobic additive; and an aqueous solvent. The hydrophobic additive has the effect of increasing the surface tension of the dam slurry for electrode, thereby reducing the occurrence of fat edges. The hydrophobic additive is a particle shape with a measured specific surface area (BET) of 500 $m^2/g$ or more, and the content of the hydrophobic additive is in a range of 0.03 parts by weight to 35 parts by weight, based on 100 parts by weight of the total solid content.

The present disclosure applies the hydrophobic additive to increase the viscosity, surface tension, and adhesion of the dam slurry for electrode, and minimize the occurrence of fat edges.

In one embodiment, the dam slurry comprises, based on 100 parts by weight of total solid content, 60 parts by weight to 90 parts by weight of inorganic particles; 5 parts by weight to 20 parts by weight of the binder; and 0.03 parts by weight to 35 parts by weight of the hydrophobic additive. The content of the hydrophobic additive is in a range of 0.03 parts by weight to 30 parts by weight, 0.05 parts by weight to 20 parts by weight, 0.5 parts by weight to 25 parts by weight, or 1 part by weight to 20 parts by weight. By controlling the content of the hydrophobic additive to the above range, the surface tension can be improved while minimizing the fat edge phenomenon.

In one embodiment, the hydrophobic additive has a specific surface area (BET) in a range of 700 $m^2/g$ to 3,000 $m^2/g$. For example, the specific surface area (BET) of the hydrophobic additive is in the range of 950 $m^2/g$ to 3,000 $m^2/g$, 950 $m^2/g$ to 2,500 $m^2/g$, 700 $m^2/g$ to 1,500 $m^2/g$, or 1,500 $m^2/g$ to 3,000 $m^2/g$. If the specific surface area of the hydrophobic additive is lower than the above range, the fat edge reduction effect is not sufficient.

In a specific embodiment, the hydrophobic additive is a carbon-based additive. For example, the hydrophobic additive is formed from graphite, and is, for example, activated carbon. The activated carbon is formed of graphite, connected by carbon-carbon bonding, and forms a porous structure. The activated carbon is a porous structure with a large specific surface area, and can implement a high surface tension by adsorbing SBR binder or the like in the pores even with a small amount.

In one embodiment, the carbon-based additive includes one or more types of a first additive with a specific surface area in a range from 700 $m^2/g$ to 1,500 $m^2/g$; and a second additive with a specific surface area in a range from 1,500 $m^2/g$ to 3,000 $m^2/g$. Specifically, the first additive has a specific surface area in the range of 700 $m^2/g$ to 1,500 $m^2/g$ and an average particle size (D50) in the range of 25 $\mu$m to 60 $\mu$m. For example, the first additive has a specific surface area in a range of 1,000 $m^2/g$ to 1,250 $m^2/g$ and an average particle size (D50) in a range of 35 $\mu$m to 45 $\mu$m. In addition, the second additive has a specific surface area in a range of 1,500 $m^2/g$ to 2,200 $m^2/g$ and an average particle size (D50) in a range of 2 $\mu$m to 10 $\mu$m. For example, the second additive has a specific surface area in the range of 1,600 $m^2/g$ to 2,100 $m^2/g$, and an average particle size (D50) in the range of 3 $\mu$m to 6 $\mu$m.

In the present disclosure, a carbon-based additive can be used as the hydrophobic additive, and there are several methods for increasing the hydrophobicity of the carbon-based additive. First, the method of using high specific surface area activated carbon can be considered. Next, heat treatment, e.g., heat treatment at 500 °C, can be used to increase the hydrophobicity of the activated carbon. In addition to this, the hydrophobicity of the activated carbon can also be increased by acid or base processing. The present disclosure includes any hydrophobic additive to which the above methods have been applied.

In one embodiment, the binder may be an aqueous binder. For example, the binder may be one or more types selected from the group consisting of carboxymethyl cellulose, styrene-butadiene rubber, acrylate styrene-butadiene rubber, acrylonitrile-butadiene rubber, acrylonitrile-butadiene-styrene rubber, acrylic rubber, butyl rubber, fluorine rubber, polytetrafluoroethylene, polyethylene, polypropylene, ethylene-propylene copolymer, polyethylene oxide, polyvinylpyrrolidone, polyepichlorohydrin, polyphosphazene, polyacrylonitrile, polystyrene, ethylene-propylene-diene copolymer, polyvinylpyridine, chlorosulfonated polyethylene, latex, polyester resin, acrylic resin, phenol resin, epoxy resin, polyvinyl alcohol, hydroxypropyl methylcellulose, hydroxypropyl cellulose, and diacetyl cellulose.

Specifically, the binder includes one or more types of carboxymethyl cellulose (CMC) and styrene butadiene rubber (SBR). For example, the binder may be a composition including carboxymethyl cellulose (CMC) and styrene butadiene rubber (SBR) binder in a weight ratio of 1:1 to 1:3.

Moreover, the inorganic particles may be one or more selected from the group consisting of, for example, AlOOH, $Al_2O_3$, $\gamma$-AlOOH, $Al(OH)_3$, $Mg(OH)_2$, $Ti(OH)_4$, MgO, CaO, $Cr_2O_3$, $MnO_2$, $Fe_2O_3$, $Co_3O_4$, NiO, $ZrO_2$, $BaTiO_3$, $SnO_2$, $CeO_2$, $Y_2O_3$, $SiO_2$, silicon carbide (SIC), and boron nitride (BN). In a specific example, the inorganic particle may be one or more selected from the group consisting of AlOOH, $Al_2O_3$, $\gamma$-AlOOH, and $Al(OH)_3$. For example, the inorganic particles may be one or more of the group consisting of boehmite (AlOOH) and alumina ($Al_2O_3$),or AlOOH.

The average particle diameter of the inorganic particles may be from 0.1 $\mu$m to 100 $\mu$m; from 0.5$\mu$m to 80 $\mu$m; from 1 $\mu$m to 50 $\mu$m; from 2$\mu$m to 30 $\mu$m; from 3$\mu$m to 20 $\mu$m; or from 5$\mu$m to 10 $\mu$m. In the present disclosure, by providing the dam slurry containing inorganic particles, it is possible to increase the insulating properties and to form a more uniform insulating layer.

The solvent may be an aqueous solvent, for example, the solvent is water ($H_2O$).

In one embodiment, the dam slurry is substantially without electrical conductivity. For example, based on volume resistance, the dam slurry has a resistance of 1,000 $\Omega \cdot$cm or more, or in a range of 1,000 $\Omega \cdot$cm to 5,000 $\Omega \cdot$cm.

In another embodiment, the dam slurry has a surface tension of 70 mN/m or more. The dam slurry according to the present disclosure has a high surface tension by including an appropriate amount of hydrophobic additive. For example, the surface tension of the dam slurry is in a range from 70 mN/m to 100 mN/m, or in a range from 70 mN/m to 75 mN/m.

In addition, the present disclosure provides an electrode for a secondary battery in which a dam insulating layer is formed using the dam slurry for electrode described above.

In one embodiment, the electrode for the secondary battery includes: a current collector; an active material layer formed on one side or both sides of the current collector; and a dam insulating layer formed on a width direction side surface of the active material layer. Here, the dam insulating layer includes inorganic particles, a binder, and a hydrophobic additive. The hydrophobic additive is a particle shape with a specific surface area (BET) of 500 $m^2$/g or more. In addition, the content of the hydrophobic additive is in a range of 0.03 parts by weight to 35 parts by weight, based on 100 parts by weight of the total dam insulating layer. Specifically, the dam insulating layer is applicable as an insulating layer insulating a boundary region between an uncoated part and a coated part, and as a dam defining a width of the coated part.

In one embodiment, the electrode for the secondary battery according to the present disclosure satisfies formula 1 below.

[Formula 1]

$$75 \leq \frac{H_{edge}}{H_{ever}} \text{ x } 100 \leq 110$$

In formula 1 above,

$H_{ever}$ represents an average height (mm) of a flat portion of the active material layer, and
$H_{edge}$ represents a maximum height (mm) observed at an edge portion of the active material layer.

The numerical value calculated by the above formula 1 is 110 or less, specifically in a range of 75 to 110, in a range of 80 to 110, in a range of 85 to 100, or in a range of 85 to 95. The inventors of the present disclosure have confirmed, through repeated and various experiments, that the above numerical range can be controlled by adjusting the content and specific surface area of the hydrophobic additive. For example, by adjusting the content of the hydrophobic additive to 0.5 parts by weight or more, the numerical value calculated by the above formula 1 is controlled in the range of 85 to 100. In order to suppress the occurrence of fat edges of the electrode for the secondary battery, it is advantageous that the numerical value calculated by the above formula 1 is controlled to 100 or less.

In the present disclosure, "flat portion of an active material layer" refers to a region in which an active material layer formed on a current collector forms a flat surface, and specifically refers to a region excluding an edge portion of the active material layer.

In addition, in the present disclosure, "edge portion of the active material layer" refers to a region located at the boundary between the coated part and the uncoated part of the active material layer formed on the current collector of the electrode. For example, the edge portion of the active material layer refers to a region with a reduced thickness of the active material layer located at the left and right ends, based on the width direction of the active material, and a part coated with a dam insulating layer.

In yet another embodiment, the dam insulating layer has an average thickness ($D_{ave}$) in a range of 10 $\mu$m to 100 $\mu$m. For example, the average thickness ($D_{ave}$) of the dam insulating layer is in a range of 10 $\mu$m to 60 $\mu$m or in a range of 30 $\mu$m to 50 $\mu$m.

In one embodiment, the electrode is a negative electrode. In the conventional art, technologies for forming an insulating layer on the positive electrode to secure the safety of the electrode have been studied. The present disclosure provides the negative electrode to which a dam insulating layer is applied, which performs the role of such an insulating layer and also acts as a dam defining the coating region of the active material layer.

In addition, the present disclosure provides a method of manufacturing an electrode by applying the dam slurry described above. In one embodiment, an electrode manufacturing method according to the present disclosure includes an electrode coating step of discharging an electrode slurry and a dam slurry on a current collector; and a step of drying the electrode coated with the electrode slurry and dam slurry. The dam slurry is as previously described.

The drying step may be performed at an average temperature range of 50°C to 300°C. The process of drying the electrode slurry and the dam slurry can be performed by any drying method known in the art, and will result in the removal of solvents contained in the electrode slurry and the dam slurry. In a specific example, the drying step may be applied by changing a hot air method, a direct heating method, an induction heating method, or the like at a temperature at which all of the solvent is volatilized, and is not limited thereto. In this case, the drying temperature may be in a temperature range of 50°C to 300°C, a range of 60°C to 200°C, or a range of 70°C to 150°C. After the drying step, it may further comprise a rolling process.

The electrode slurry is discharged and dried to form an active material layer, and the dam slurry is discharged and dried to form a dam insulating layer. In addition, in the present disclosure, the region where the active material layer is formed on the current collector is referred to as a coated part, and the region where the active material layer is not formed on the current collector is referred to as an uncoated part.

In one embodiment, in the electrode coating step, the electrode slurry is discharged on the current collector to form a coated part, and the dam slurry is discharged on the uncoated part where the electrode slurry is not discharged. Specifically, the dam slurry is discharged on a side surface in the width direction of the region where the electrode slurry is discharged.

In one embodiment, the electrode coating step is performed by simultaneously discharging, in a slot die, the electrode slurry and the dam slurry on the current collector. The discharging of the electrode slurry is performed through a slot die. The slot die includes first and second blocks, and discharges the electrode slurry through a slot located between the first and second blocks. In the slot positioned between the first and second blocks, a coating shim is disposed to control the discharge width of the electrode slurry. For example, the coating shim may be a structure in which an electrode slurry discharge line is formed, and a dam slurry discharge line is formed on the left and right sides of the electrode slurry discharge line.

[Detailed Description]

Hereinafter, the present disclosure is described in more detail through examples and experimental examples. However, the following examples and experimental examples are merely illustrative of the present disclosure, and the content of the present disclosure is not limited to the following examples and experimental examples.

**Examples 1 to 18**

A dam slurry was prepared by mixing boehmite, CMC (carboxymethyl cellulose), SBR (styrene-butadiene rubber, ZEON BM451B product), and a hydrophobic additive with water as a solvent. Activated carbon was used as the hydrophobic additive. The specific composition and content for each example are shown in Table 1 below.

The specific surface area of the hydrophobic additive was measured by the BET (Brunauer-Emmett-Teller) method, specifically calculated from nitrogen gas adsorption amount using liquid nitrogen.

[Table 1]

| No. | Boehmite (wt%) | CMC (wt%) | SBR (wt%) | Hydrophobic additive (wt%) | Hydrophobic additive specific surface area ($m^2/g$) | Solid content (wt%) | Viscosity (Pa.s) |
|---|---|---|---|---|---|---|---|
| Example 1 | 68 | 4 | 8 | 20 | 1144 | 29.0% | 7.03 |
| Example 2 | 78 | 4 | 8 | 10 | 1144 | 29.0% | 6.44 |
| Example 3 | 83 | 4 | 8 | 5 | 1144 | 29.0% | 5.81 |
| Example 4 | 86 | 4 | 8 | 2 | 1144 | 29.0% | 5.39 |
| Example 5 | 87.5 | 4 | 8 | 0.5 | 1144 | 29.0% | 5.28 |
| Example 6 | 87.6 | 4 | 8 | 0.4 | 1144 | 29.0% | 5.74 |
| Example 7 | 87.7 | 4 | 8 | 0.3 | 1144 | 29.0% | 5.46 |
| Example 8 | 87.6 | 4 | 8 | 0.4 | 1983 | 29.0% | 6.52 |

(continued)

| No. | Boehmite (wt%) | CMC (wt%) | SBR (wt%) | Hydroph obic additive (wt%) | Hydrophobic additive specific surface area ($m^2/g$) | Solid content (wt%) | Viscosity (Pa.s) |
|---|---|---|---|---|---|---|---|
| Example 9 | 87.7 | 4 | 8 | 0.3 | 1983 | 29.0% | 6.62 |
| Example 10 | 87.8 | 4 | 8 | 0.2 | 1983 | 29.0% | 6.70 |
| Example 11 | 87.9 | 4 | 8 | 0.1 | 1983 | 29.0% | 6.22 |
| Example 12 | 87.95 | 4 | 8 | 0.05 | 1983 | 29.0% | 7.31 |
| Example 13 | 86.5 | 5 | 8 | 0.5 | 1983 | 24.9% | 6.30 |
| Example 14 | 85.5 | 6 | 8 | 0.5 | 1983 | 21.8% | 5.90 |
| Example 15 | 88.5 | 3 | 8 | 0.5 | 1983 | 35.0% | 7.39 |
| Example 16 | 87.5 | 4 | 8 | 0.5 | 1983 | 29.0% | 7.55 |
| Example 17 | 87.5 | 4 | 8 | 0.5 | 1983 | 27.9% | 6.42 |
| Example 18 | 87.5 | 4 | 8 | 0.5 | 1983 | 26.7% | 5.15 |

Referring to Table 1, Examples 1 to 7 used large particle activated carbon as the hydrophobic additive, and Examples 8 to 12 used relatively small particle activated carbon. Also, Examples 13 to 15 controlled the CMC content, and Examples 16 to 18 are examples of controlling the solid content.

**Comparative Examples 1 to 6**

A dam slurry was prepared by mixing boehmite, CMC (carboxymethyl cellulose), SBR (styrene-butadiene rubber, ZEON BM451B product), and a hydrophobic additive with water as a solvent. Activated carbon was used as the hydrophobic additive. The specific composition and content for each example are shown in Table 2 below.

[Table 2]

| No. | Boehmite (wt%) | CMC (wt%) | SBR (wt%) | Hydrop hobic additive (wt%) | Hydrophobic additive specific surface area ($m^2/g$) | Solid content (wt%) | Viscosity (Pa.s) |
|---|---|---|---|---|---|---|---|
| comparative example1 | 87.5 | 4 | 8 | 0.5 | 63 | 25.0% | 2.41 |
| comparative example 2 | 87 | 4 | 8 | 5 | 63 | 25.0% | 3.05 |
| comparative example 3 | 88 | 4 | 8 | 0 | 0 | 25.0% | 7.27 |
| comparative example 4 | 95.5 | 1.5 | 3 | 0 | 0 | 45.0% | 7.64 |
| comparative example 5 | 87.99 | 4 | 8 | 0.01 | 1983 | 29.0% | 6.11 |
| comparative example 6 | 87.99 | 4 | 8 | 0.01 | 1144 | 29.0% | 5.34 |

Referring to Table 2, Comparative Examples 1 and 2 used C65 (carbon black) as the hydrophobic additive. Comparative Examples 3 and 4 did not use a hydrophobic additive, and Comparative Examples 5 and 6 used activated carbon as the hydrophobic additive with its content controlled to a level of 0.01 wt%.

**Experimental Example**

For each prepared electrode specimen, viscosity, surface tension, adhesion, fat edge, and powder resistance were measured. The measurement methods are as follows:

Surface Tension Evaluation

- Surface tension measuring equipment: DCA-200 (Dynamic Contact Angle System) manufactured by SEO
- Motor speed: 15 / Probe type: Ring / Immersion Depth: 4 / Surface Detect Weight: 0.005 / Stabilization Time: 5

Adhesion Evaluation

- Adhesion evaluation was performed on electrode specimens cut to a size of 150 mm in length and 20 mm in width
- The coated surface of the electrode specimen was attached with double-sided tape to a slide glass of 75 mm in length and 25 mm in width
- The evaluation sample was prepared by passing through a laminator (temperature not set, speed level 9) to ensure uniform attachment of the double-sided tape
- The portion of the electrode specimen attached to the slide glass was fixed to the sample stage, and the remaining half portion not attached to the slide glass was connected to the load cell of the UTM equipment
- The load cell measured the load while moving 50 mm under conditions of 100 mN/min speed and 90° force application
- The average value of loads measured in the 20 mm to 40 mm section during the driving was calculated, repeated 5 times in total, and the average value was evaluated as the adhesion(gf/20mm) of each electrode specimen

Step Measurement and Fat Edge Evaluation

- 3D measurement of the electrode was performed by keeping the electrode specimen flat and setting the laser microscope camera magnification to 25x (x25) and focusing
- The zero point was set to the current collector foil thickness, and the thickness of the coated electrode active material layer (based on flat surface), dam slurry thickness, and edge portion thickness (mm) between the electrode active material layer and dam slurry were measured
- Fat edge was calculated as (edge portion thickness)/(electrode active material layer thickness) x 100

Volume Resistance Measurement

- The powder to be measured was put into a cylinder with a diameter of 2 cm and height of 5 cm
- The input powder was pressurized from 200 kgf to 2,000 kgf
- The electrical conductivity of the powder was measured at every 200 kgf pressure unit and converted to volume resistance value
- When the volume resistance value was 1000 ohm·cm or more, it was marked as No conductivity

[Table 3]

| No. | Surface tension (mN/m) | Adhesion (gf/20mm) | Fat edge | Volume resistance (ohm·cm) |
|---|---|---|---|---|
| Example 1 | 74.8809 | 170 | 88 | No conductivity |
| Example 2 | 74.8351 | 173 | 88 | No conductivity |
| Example 3 | 73.9546 | 167 | 89 | No conductivity |
| Example 4 | 74.1375 | 170 | 86 | No conductivity |
| Example 5 | 72.9585 | 170 | 89 | No conductivity |
| Example 6 | 70.7993 | 165 | 99 | No conductivity |
| Example 7 | 70.1185 | 164 | 105 | No conductivity |
| Example 8 | 73.4991 | 150 | 87 | No conductivity |

(continued)

| No. | Surface tension (mN/m) | Adhesion (gf/20mm) | Fat edge | Volume resistance (ohm·cm) |
|---|---|---|---|---|
| Example 9 | 72.1711 | 147 | 91 | No conductivity |
| Example 10 | 72.0748 | 145 | 82 | No conductivity |
| Example 11 | 70.6471 | 143 | 97 | No conductivity |
| Example 12 | 70.3222 | 140 | 106 | No conductivity |
| Example 13 | 74.1349 | 163 | 89 | No conductivity |
| Example 14 | 73.2406 | 152 | 91 | No conductivity |
| Example 15 | 73.7781 | 135 | 93 | No conductivity |
| Example 16 | 74.1414 | 157 | 94 | No conductivity |
| Example 17 | 74.0174 | 150 | 91 | No conductivity |
| Example 18 | 74.0456 | 146 | 90 | No conductivity |

Referring to Table 3, the electrode specimens of Examples 1 to 18 have a surface tension of 70 (mN/m) or more and an adhesionof 130 (gf/20mm) or more. Also, it was confirmed that the fat edge calculation results did not exceed 106.

Specifically, Examples 1 to 7 used largeparticle activated carbon as the hydrophobic additive, and Examples 8 to 12 used smallparticle activated carbon as the hydrophobic additive. Particularly, when compared with Example 8, Example 6 has relatively lower surface tension but shows better adhesionand an equivalent level of fat edge.

In addition, it was found that the electrode specimens of Examples 1 to 5 showed good overall performance. The electrode specimens of Examples 1 to 5 have a hydrophobic additive content in a range of 0.5wt% to 20 wt%.

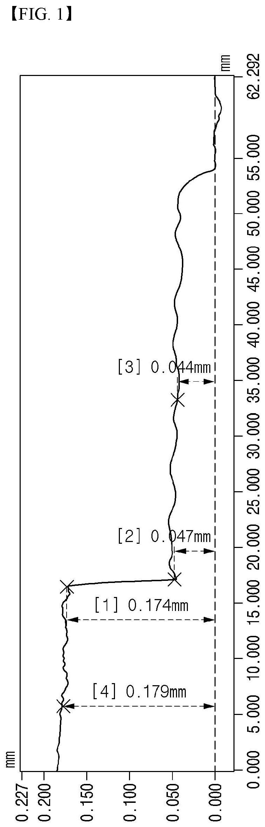

FIG. 1 below shows the thickness profile measurement results of the electrode specimen according to Example 11. Referring to FIG. 1, the fat edge is 97 ((0.174/0.179) x 100).

[Table 4]

| No. | Surface tension (mN/m) | Adhesion (gf/20mm) | Fat edge | Volume resistance (ohm·cm) |
|---|---|---|---|---|
| comparative example 1 | 63.3471 | 148 | 125 | 702.2 |
| comparative example 2 | 68.6140 | 142 | 120 | 68.6 |
| comparative example 3 | 60.2427 | 150 | 131 | No conductivity |
| comparative example 4 | 60.3156 | 121 | 132 | No conductivity |
| comparative example 5 | 67.1543 | 137 | 119 | No conductivity |
| comparative example 6 | 67.8794 | 149 | 117 | No conductivity |

Referring to Table 4, it can be seen that the specimens of Comparative Examples 1 to 6 have a surface tension less than 69 (mN/m) and an adhesion not exceeding 150 (gf/20mm). In particular, it was confirmed that the fat edge calculation results were 117 or more.

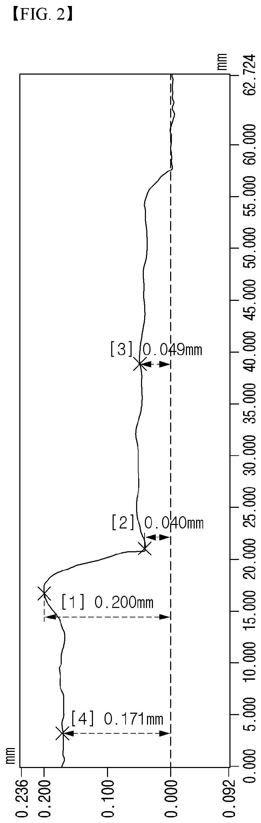

FIG. 2 below shows the thickness profile measurement results of the electrode specimen according to Comparative Example 6. Referring to FIG. 2, the fat edge is 117 ((0.200/0.171) x 100).

**Claims**

1.  A dam slurry for electrode, comprising:

    inorganic particles; a binder; a hydrophobic additive; and an aqueous solvent,
    wherein the hydrophobic additive has a particle shape with a BET specific surface area of 500 m$^2$/g or more,
    wherein the content of the hydrophobic additive is in a range of 0.03 parts by weight to 35 parts by weight based on 100 parts by weight of total solid content.

2.  The dam slurry for electrode of claim 1, wherein the dam slurry comprises, based on 100 parts by weight of total solid content,

60 parts by weight to 90 parts by weight of the inorganic particles;
5 parts by weight to 20 parts by weight of the binder; and
0.03 parts by weight to 35 parts by weight of the hydrophobic additive.

3. The dam slurry for electrode of claim 1, wherein the hydrophobic additive has a BET specific surface area in a range of 700 m$^2$/g to 3,000 m$^2$/g.

4. The dam slurry for electrode of claim 1, wherein the hydrophobic additive is a carbon-based additive.

5. The dam slurry for electrode of claim 4, wherein the carbon-based additive comprises,

one or more types of a first additive having a specific surface area in a range from 700 m$^2$/g to 1,500 m$^2$/g; and
a second additive having a specific surface area in a range from 1,500 m$^2$/g to 3,000 m$^2$/g.

6. The dam slurry for electrode of claim 1, wherein the binder comprises carboxymethylcellulose (CMC) and styrene butadiene rubber (SBR) binders in a weight ratio of 1:1 to 1:3.

7. The dam slurry for electrode of claim 1, wherein the inorganic particles are one or more types of boehmite (AlOOH) and alumina (Al$_2$O$_3$).

8. The dam slurry for electrode of claim 1, wherein the dam slurry has a volume resistance of 1,000 Ω·cm or more.

9. The dam slurry for electrode of claim 1, wherein the dam slurry has a surface tension of 70 mN/m or more.

10. An electrode for a secondary battery, comprising:

a current collector;
an active material layer formed on one side or both sides of the current collector; and
a dam insulating layer formed on a width direction side surface of the active material layer,
wherein the dam insulating layer comprises,
inorganic particles, a binder, and a hydrophobic additive.
wherein the hydrophobic additive is a particle shape with a BET specific surface area of 500 m$^2$/g or more,
wherein the content of the hydrophobic additive is in a range of 0.03 parts by weight to 35 parts by weight based on 100 parts by weight of total dam insulating layer.

11. The electrode for the secondary battery of claim 10, which satisfies formula 1 below:

[Formula 1]

$$75 \leq \frac{H_{edge}}{H_{ever}} \times 100 \leq 110$$

wherein H$_{ever}$ represents an average height in mm of a flat portion of the active material layer, and
wherein H$_{edge}$ represents a maximum height in mm observed at an edge portion of the active material layer.

12. The electrode for the secondary battery of claim 10, wherein the electrode is a negative electrode.

13. An electrode manufacturing method, comprising:

an electrode coating step of discharging an electrode slurry and the dam slurry according to claim 1 on a current collector; and
a step of drying the electrode coated with the electrode slurry and the dam slurry.

14. The electrode manufacturing method of claim 13, wherein the electrode coating step discharges the electrode slurry on the current collector to form a coated part,

Wherein the dam slurry is discharged on an uncoated part where the electrode slurry is not discharged.

15. The electrode manufacturing method of claim 13, wherein the electrode coating step is performed by simultaneously discharging, in a slot die, the electrode slurry and the dam slurry on the current collector.

【FIG. 1】

【FIG. 2】

## INTERNATIONAL SEARCH REPORT

| International application No. |
|---|
| **PCT/KR2024/016081** |

### A. CLASSIFICATION OF SUBJECT MATTER

**H01M 4/13**(2010.01)i; **H01M 4/62**(2006.01)i; **H01M 4/04**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/13(2010.01); H01M 10/052(2010.01); H01M 2/34(2006.01); H01M 4/04(2006.01); H01M 4/62(2006.01); H01M 50/463(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 무기 입자(inorganic particle), 소수성 첨가제(hydrophobic additive), 수계 용매(aqueous solvent), 비표면적(specific surface area)

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0106989 A (LG ENERGY SOLUTION, LTD.) 14 July 2023 (2023-07-14)<br>See claims 1, 2 and 8; and paragraphs [0058] and [0144]. | 1-15 |
| A | KR 10-2023-0015636 A (LG ENERGY SOLUTION, LTD.) 31 January 2023 (2023-01-31)<br>See claims 1-10. | 1-15 |
| A | JP 2018-045952 A (NEC ENERGY DEVICES LTD.) 22 March 2018 (2018-03-22)<br>See claims 1-10. | 1-15 |
| A | KR 10-2020-0049640 A (TOYOTA JIDOSHA KABUSHIKI KAISHA) 08 May 2020 (2020-05-08)<br>See claims 1-17; and figure 6. | 1-15 |
| A | WO 2017-163846 A1 (NEC ENERGY DEVICES, LTD.) 28 September 2017 (2017-09-28)<br>See claims 1-11. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 January 2025** | **17 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/016081**

| Patent document cited in search report | | | Publication date (day/month/year) | Patent family member(s) | | | Publication date (day/month/year) |
|---|---|---|---|---|---|---|---|
| KR | 10-2023-0106989 | A | 14 July 2023 | CN | 116802829 | A | 22 September 2023 |
| | | | | EP | 4266401 | A1 | 25 October 2023 |
| | | | | JP | 2024-505452 | A | 06 February 2024 |
| | | | | US | 2024-0088453 | A1 | 14 March 2024 |
| | | | | WO | 2023-132531 | A1 | 13 July 2023 |
| KR | 10-2023-0015636 | A | 31 January 2023 | CN | 117716525 | A | 15 March 2024 |
| | | | | EP | 4362130 | A1 | 01 May 2024 |
| | | | | JP | 2024-525949 | A | 12 July 2024 |
| | | | | WO | 2023-003426 | A1 | 26 January 2023 |
| JP | 2018-045952 | A | 22 March 2018 | None | | | |
| KR | 10-2020-0049640 | A | 08 May 2020 | CN | 111129506 | A | 08 May 2020 |
| | | | | CN | 111129506 | B | 19 December 2023 |
| | | | | JP | 2020-072007 | A | 07 May 2020 |
| | | | | JP | 7155881 | B2 | 19 October 2022 |
| | | | | KR | 10-2316428 | B1 | 22 October 2021 |
| | | | | US | 11695120 | B2 | 04 July 2023 |
| | | | | US | 11695121 | B2 | 04 July 2023 |
| | | | | US | 11811067 | B2 | 07 November 2023 |
| | | | | US | 2020-0136133 | A1 | 30 April 2020 |
| | | | | US | 2022-0200008 | A1 | 23 June 2022 |
| | | | | US | 2022-0246941 | A1 | 04 August 2022 |
| WO | 2017-163846 | A1 | 28 September 2017 | JP | 2019-163846 | A1 | 07 February 2019 |
| | | | | US | 2021-0210761 | A1 | 08 July 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230142321